# EUROPÄISCHE PATENTSCHRIFT

(11) **EP 1 336 100 B1**
(45) Veröffentlichungstag und Bekanntmachung des Hinweises auf die Patenterteilung: **21.01.2009**
(21) Anmeldenummer: 01980105.9
(22) Anmeldetag: 12.11.2001
(51) Int. Cl.: G01N 30/20

(54) **PROBENAUFGABEVENTIL FÜR HPLC-GERÄTE**
SAMPLE INJECTION VALVE FOR HIGH-PERFORMANCE LIQUID CHROMATOGRAPHY (HPLC) DEVICES
SOUPAPE D'INJECTION D'ECHANTILLONS POUR APPAREILS DE CHROMATOGRAPHIE LIQUIDE A HAUTE PERFORMANCE

(30) Priorität: 13.11.2000 CH 220700
(43) Veröffentlichungstag der Anmeldung: 20.08.2003
(73) Patentinhaber: CTC Analytics AG, 4222 Zwingen (CH)
(72) Erfinder: CUENI, Hansjörg, CH-6362 Stansstad (CH); SCHERRER, Heinrich, CH-4227 Büsserach (CH)
(74) Vertreter: Braun, André jr.
(86) Internationale Anmeldenummer: PCT/CH2001/000661
(87) Internationale Veröffentlichungsnummer: WO 2002/039105

(56) Entgegenhaltungen:
- EP-A- 0 360 604
- US-A- 3 630 371
- US-A- 4 444 066
- US-A- 4 811 611
- US-A- 5 194 226
- US-A- 5 308 774

## Beschreibung

Die Erfindung betrifft ein Probenaufgabeventil für HPLC-Geräte mit einem Stator mit Eingängen für die Probe und die mobile Phase, Ausgängen zur Chromatographiesäule und zu einem Abfallsammler, sowie Anschlüssen für die beiden Enden einer Probenschleife und mit einem Rotor mit Verbindungskanälen.

Probenaufgabeventile dieser Art sind in den meisten bekannten HPLC-Geräten im Einsatz. Der Rotor kann zwei Positionen einnehmen. In der einen Position ist der Probeneingang mit einem Ende der Probenschleife verbunden, so dass diese mit Probe gefüllt wird. In der zweiten Position ist der Probeneingang in der Regel mit dem Abfallsammler verbunden, um den nicht benötigten Rest der Probe zu entsorgen. Gleichzeitig ist in der zweiten Position die Probenschleife zwischen den Eingang für die mobile Phase und den Ausgang zur Säule geschaltet. Diese zweite Position des Rotors entspricht somit der Probenaufgabephase, in welcher die in der Schleife abgemessene Probenmenge zur Säule transportiert wird.

Die Probenaufgabephase wird dazu genutzt, die Kanüle der Probenpipette zu reinigen, um Kontamination zwischen aufeinanderfolgenden Proben zu vermeiden. Zu diesem Zweck wird die Pipette üblicherweise zu einer separaten Reinigungsvorrichtung transferiert, bevor sie für die nächste Probenaufnahme zur Verfügung steht.

Mit diesem Verfahren kann zwar die Reinigung der Kanüle sichergestellt werden, aber im Eingangsbereich am Stator - üblicherweise eine Art Manschette, welche während der Probeneinspritzung die Kanüle eng umschliesst - findet keine Reinigung statt. Es hat sich mit zunehmender Messgenauigkeit herausgestellt, dass dort tatsächlich Kontamination stattfindet.

Ein weiterer Nachteil des bekannten Verfahrens besteht darin, dass die Reinigungsvorgänge mehr Zeit benötigen als die Probenaufgabe, so dass die Reinigung einen limitierenden Faktor für den Probendurchsatz pro Zeiteinheit darstellt.

Der Erfindung liegt deshalb die Aufgabe zugrunde, die Reinigung der Pipettenkanüle und des Probeneinganges zuverlässiger und schneller vorzunehmen.

Erfindungsgemäss wird dies gelöst durch ein Probenaufgabeventil der eingangs genannten Art, bei welchem ein zusätzlicher Waschflüssigkeitseingang angeordnet ist, der in einer Ventilposition, in welcher der Probeneingang durch einen Verbindungskanal mit dem Ausgang zum Abfallsammler verbunden ist, in diesen Verbindungskanal mündet.

Das Dokument JP-A-06018377 beschreibt ein Probenaufgabeventil für HPLC Geräte entsprechend dem Oberbegriff des Anspruchs 1.

Im folgenden wird anhand der beiliegenden Zeichnungen ein Ausführungsbeispiel der Erfindung beschrieben. Es zeigen:
- Fig. 1: eine schematische Darstellung eines Probenaufgabeventils in einer Schaltposition,
- Fig. 2: das Probenaufgabeventil in seiner zweiten Position

In den beiden Figuren sind schematisch die Anschlüsse und ihre Verbindungen gezeigt. Auf die Darstellung der äusseren Form des Probenaufgabeventils wird verzichtet, weil sie für die Funktion unerheblich ist und die möglichen Formen solcher Probenaufgabeventile hinreichend bekannt sind.

Das in den Figuren gezeigte Probenaufgabeventil hat am Stator die folgenden Sieben Anschlüsse: Probeneingang 1, Abfallausgang 2, ein Anschluss 3 für ein erstes Ende einer Probenschleife 8, Mobilphaseneingang 4, Säulenanschluss 5, ein Anschluss 6 für das zweite Ende der Probenschleife 8 sowie ein zwischen Probeneingang 1 und Abfallausgang 2 angeordneter Waschflüssigkeitseingang 7. Die Anschlüsse werden durch Verbindungskanäle im Rotor in verschiedenen Kombinationen untereinander verbunden.

Die Verbindungskanäle im Rotor werden durch Nuten in einer der ebenen Rotorflächen gebildet. Im vorliegenden Ausführungsbeispiel besitzt der Rotor drei Nuten 9, 10, 11. Der Rotor wird zwischen zwei Positionen geschaltet, in denen die folgenden Verbindungen bestehen:

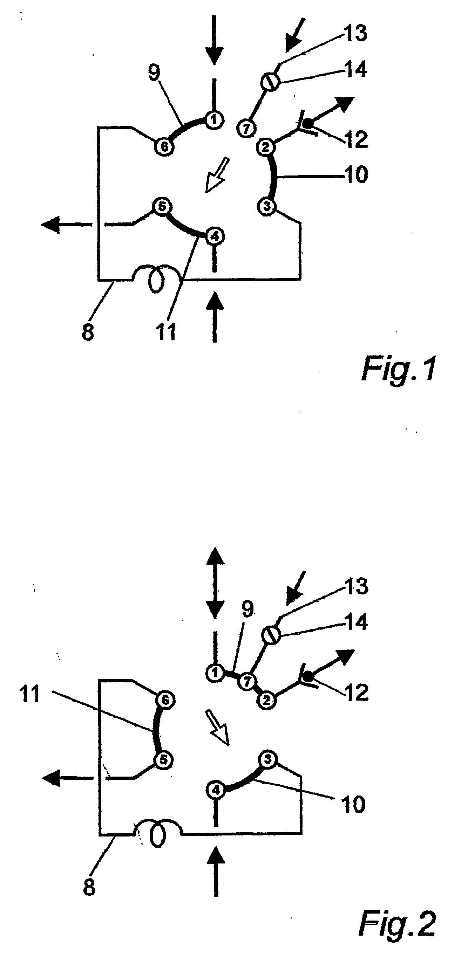

In der in Fig. 1 gezeigten Position ist der Probeneingang durch die Nut 9 mit einem Ende der Probenschleife und deren anderes Ende durch die Nut 10 mit dem Abfallausgang 2 verbunden. Die Nut 11 verbindet den Mobilphaseneingang 4 mit dem Säulenanschluss. In dieser Position wird mittels einer in den Probeneingang eingeführten Pipetten- oder Spritzenkanüle die Probenschleife mit Probe gefüllt, wobei ein Überschuss in den Abfall abfliesst. Gleichzeitig wird die Säule mit Mobilphase gespült. Der Waschflüssigkeitseingang 7 ist geschlossen.

In der in Fig. 2 gezeigten Position ist der Probeneingang 1 durch die Nut 9 mit dem Waschflüssigkeitseingang 7 und mit dem Abfallausgang 2 verbunden. Gleichzeitig verbinden die Nut 10 das eine Ende 3 der Probenschleife 8 mit dem Mobilphaseneingang 4 und die Nut 11 das andere Ende 6 der Probenschleife 8 mit dem Säulenanschluss 5. Durch dies letztere Verbindung wird die in der Probenschleife 8 befindliche Probenmenge der Säule zugeführt.

Durch die Verbindung des Probeneinganges 1 mit dem Waschflüssigkeitseingang 7 in der in Fig. 2 gezeigten zweiten Position des Rotors, kann die Pipette oder Spritze eine für ihre Reinigung erforderliche Menge Waschflüssigkeit ansaugen und danach in den Abfall ausstossen. Damit beim Ansaugen keine Flüssigkeit aus dem Abfall in die Pipette zurückgelangen kann, ist unmittelbar ausserhalb des Abfallausgangs in der Leitung zum Abfallsammler ein Rückschlagventil 12 angeordnet.

Zum Waschflüssigkeitseingang 7 führt eine Zuführungsleitung 13, in der ein Absperrventil 14 angeordnet ist. Dieses Absperrventil 14 wird zum Reinigen des Probenaufgabeventils und der Injektionsspritze geschaltet und ist zum Ansaugen der Waschflüssigkeit geöffnet und beim Ausstossen geschlossen.

Nach diesem Reinigungsschritt ist die Pipette oder Spritze unmittelbar für die nächste Probenaufnahme bereit. Die bisher erforderliche Zeit für den Weg der Pipette zur Reinigungsvorrichtung entfällt. Dadurch wird der Probendurchsatz deutlich beschleunigt.

## Patentansprüche

1. Probenaufgabeventil für HPLC-Geräte mit einem Stator mit Eingängen für die Probe (1) und die mobile Phase (5), Ausgängen zur Chromatographiesäule (4) und zu einem Abfallsammler (2), sowie Anschlüssen für die beiden Enden einer Probenschleife (3,6) und mit einem Rotor mit Verbindungskanälen, wobei ein zusätzlicher Waschflüssigkeitseingang (7) angeordnet ist, **dadurch gekennzeichnet, dass** dieser waschflüssigkeitseingang in einer Ventilposition, in welcher der Probeneingang (1) durch einen Verbindungskanal (9) mit dem Ausgang (2) zum Abfallsammler verbunden ist, in diesen Verbindungskanal mündet.

2. Probenaufgabeventil nach Anspruch 1, **gekennzeichnet durch** ein Rückschlagventil (12) am Ausgang (2) zum Abfallsammler.

## Claims

1. Sample injection valve for HPLC devices with a stator with inputs for the sample (1) and the mobile phase (5), outputs to the chromatography column (4) and to a waste collector (2), as well as connections for the two ends of a sample loop (3, 6) and with a rotor with connection channels, wherein an additional wash liquid input (7) is arranged, **characterised in that** this wash liquid input in a valve position in which the sample input (1) is connected through a connection channel (9) to the output (2) to the waste collector, empties into this connection channel.

2. Sample injection valve according to claim 1, **characterised by** a check valve (12) at the output (2) to the waste collector.

## Revendications

1. Vanne d'injection d'échantillons pour appareils de chromatographie liquide à haute performance comprenant un stator avec des entrées pour l'échantillon (1) et la phase mobile (5), des sorties vers la colonne chromatographique (4) et vers un collecteur de déchets (2), ainsi que des raccordements pour les deux extrémités d'une boucle d'échantillonnage (3, 6) et comprenant un rotor avec des canaux de liaison, où une entrée de liquide de lavage additionnelle est disposée, **caractérisée en ce que** cette entrée de liquide de lavage débouche dans ce canal de liaison dans une position de la vanne dans laquelle l'entrée de l'échantillon (1) est reliée à la sortie (2) vers le collecteur de déchets par un canal de liaison (9).

2. Vanne d'injection d'échantillons selon la revendication 1, **caractérisée par** une soupape de retenue (12) à la sortie (2) vers le collecteur de déchets.
